# EUROPEAN PATENT APPLICATION

(11) **EP 1 790 948 A2**
(43) Date of publication of application: **30.05.2007**
(21) Application number: 06123248.4
(22) Date of filing: 31.10.2006
(51) Int. Cl.: G01C 21/36

(54) **Route guidance system and route guidance method**

(30) Priority: 31.10.2005 JP 2005317769
(71) Applicant: Aisin AW Co., Ltd., Fujii-cho Anjo Aichi 444-1192 (JP)
(72) Inventor: Nakayama, Takaaki, Okazaki Aichi 444-8564 (JP); Oonishi, Shino, Okazaki Aichi 444-8564 (JP); Takeuchi, Kensuke, Okazaki Aichi 444-8564 (JP)
(74) Representative: TBK-Patent

(57) **Abstract**

A route guidance system includes a current position detection portion; a route search processing portion that searches for a specified route to a destination; a guidance intersection setting processing portion that sets a guidance intersection based on the specified route; a recommended lane computation processing portion that computes the recommended lane on each road on the specified route, based on the specified route; a recommended lane change point detection processing portion that detects a recommended lane change point, where a recommended lane changes, between the current position and the guidance intersection; and a recommended lane change notification processing portion that, before the host vehicle arrives at the recommended lane change point, notifies the driver that the recommended lane will change. The recommended lane change point is detected, and the driver is notified, before the host vehicle arrives at the recommended lane change point, that the recommended lane will change. Therefore, the driver is not confused when being guided to drive the host vehicle in the recommended lane.

## Description

The present invention relates to a route guidance system and a route guidance method.

In a conventional navigation system, the current position of a vehicle that is a host vehicle, that is, one's current position, is detected by a Global Positioning System (GPS) device, for example. Map data is read out from a data storage portion, and a map screen is formed on a display unit. The host vehicle position, which indicates one's current position, a map of the area surrounding the host vehicle position, and the like are displayed on the map screen. Therefore, a driver, who is an operator, can drive the vehicle according to the host vehicle position that is displayed on the map screen.

When the driver inputs a destination and sets search conditions, route search processing is executed based on the search conditions, and a route to the destination from a departure position, which is expressed as the current position, is sought according to the map data. A route that is specified, that is, a specified route, is displayed on the map screen together with the host vehicle position. Guidance along the specified route, that is, route guidance, is executed. Therefore, the driver can drive the vehicle along the specified route that is displayed.

Incidentally, in route guidance, when there is a prescribed point, such as an intersection, for example, where the vehicle must turn right or left, route guidance is executed, such as by voice output, for example, before the vehicle arrives at the intersection, that is, the guidance intersection that serves as a guidance point. In order for route guidance to be executed, a plurality of route guidance points are set at locations at set distances before the guidance intersection along the specified route. When the vehicle arrives at the route guidance points, route guidance with a content that is set in advance for each of the route guidance points is output by voice. (Refer to Japanese Patent Application Publication No. JP-A-7-98223, for example.)

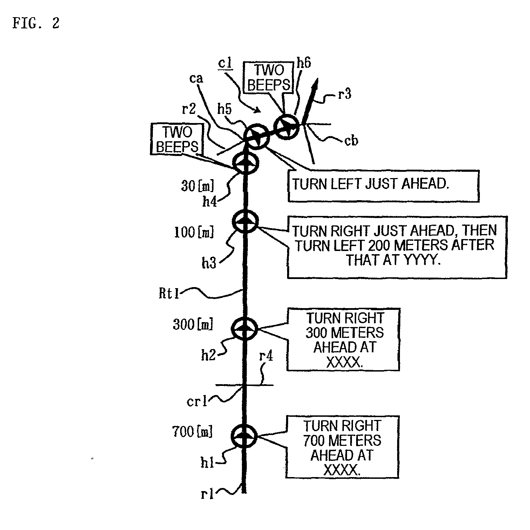

FIG. 2 is a diagram showing an example of route guidance according to a conventional navigation system.

In FIG. 2, the reference numerals r1 to r4 denote roads, the reference numeral cr1 denotes an intersection of the roads r1 and r4, and the reference numeral c1 denotes a guidance intersection where the roads r1 and r2 intersect and the roads r2 and r3 intersect. The guidance intersection c1 includes successive intersections ca and cb. The roads r1 and r2 intersect at the intersection ca, and the roads r2 and r3 intersect at the intersection cb. The reference numeral Rt1 denotes the specified route. The specified route Rt1 is configured such that it passes along the roads r1 to r3 in that order and, at the guidance intersection c1, turns right at the intersection ca, then immediately turns left at the intersection cb.

Progressing along the specified route Rt1, route guidance points h1 to h4 are set at locations 700 meters, 300 meters, 100 meters, and 30 meters before the guidance intersection c1, and route guidance points h5 and h6 are set between the intersections ca and cb on the road r2.

During travel on the road r1, a message such as "Turn right 700 meters ahead at XXXX," or the like is output by voice at the route guidance point h1. A message such as "Turn right 300 meters ahead at XXXX," or the like is output by voice at the route guidance point h2. A message such as "Turn right just ahead, then turn left 200 meters after that at YYYY," or the like is output by voice at the route guidance point h3. At the route guidance point h4, a notification sound (two beeps) is output to indicate that the vehicle is about to enter the guidance intersection c1.

Next, after the vehicle enters the guidance intersection c1, a message such as "Turn left just ahead" or the like is output by voice at the route guidance point h5. At the route guidance point h6, a notification sound (two beeps) is output to indicate that the vehicle is about to enter the intersection cb.

Incidentally, in a navigation system that is capable of providing route guidance on a lane-by-lane basis, that is, providing lane guidance, where a plurality of lanes are formed in the road r1 that enters the guidance intersection c1, in route guidance, a prescribed lane is recommended as a preferable lane for driving, that is, as a recommended lane, and the vehicle is guided from the lane in which it is currently driving, that is, the driving lane, to the recommended lane.

However, in a case where the recommended lane changes when the road circumstances change before the vehicle arrives at the guidance intersection c1, such as when there is a right turn-only lane or left turn-only lane before the intersection cr1, or if the number of lanes changes, the conventional navigation system described above recommends a lane change after the vehicle has passed the point where the recommended lane changes, that is, the recommended lane change point. This confuses the driver.

The present invention provides a route guidance system and a route guidance method that solve a problem of the conventional navigation system by not confusing the driver when guiding the driver to drive a host vehicle in a recommended lane.

For that purpose, the route guidance system according to the present invention includes a current position detection portion that detects a current position of the host vehicle; a route search processing portion that searches for a specified route to a destination, based on the current position; a guidance intersection setting processing portion that sets a guidance intersection based on the specified route; a recommended lane computation processing portion that computes the recommended lane on each road on the specified route, based on the specified route; a recommended lane change point detection processing portion that detects a recommended lane change point, where the recommended lane changes, between the current position and the guidance intersection; and a recommended lane change notification processing portion that, before the host vehicle arrives at the recommended lane change point, notifies the driver that the recommended lane will change.

According to the present invention, the recommended lane change point, where the recommended lane changes, is detected between the current position and the guidance intersection, and the driver is notified, before the host vehicle arrives at the recommended lane change point, that the recommended lane will change. Therefore, the driver is not confused when being guided to drive the host vehicle in the recommended lane.
FIG. 1 is a diagram showing a navigation system according to an embodiment of the present invention;
FIG. 2 is a diagram showing an example of route guidance according to a conventional navigation system;
FIG. 3 is a flowchart showing the operation of a route guidance processing portion according to the embodiment of the present invention;
FIG. 4 is a schematic diagram showing an example of a guidance intersection according to the embodiment of the present invention;
FIG. 5 is a detailed drawing of the guidance intersection according to the embodiment of the present invention; and
FIG. 6 is a diagram showing an example of lane guidance for the guidance intersection according to the embodiment of the present invention.

An embodiment of the present invention will be explained below with reference to the drawings.

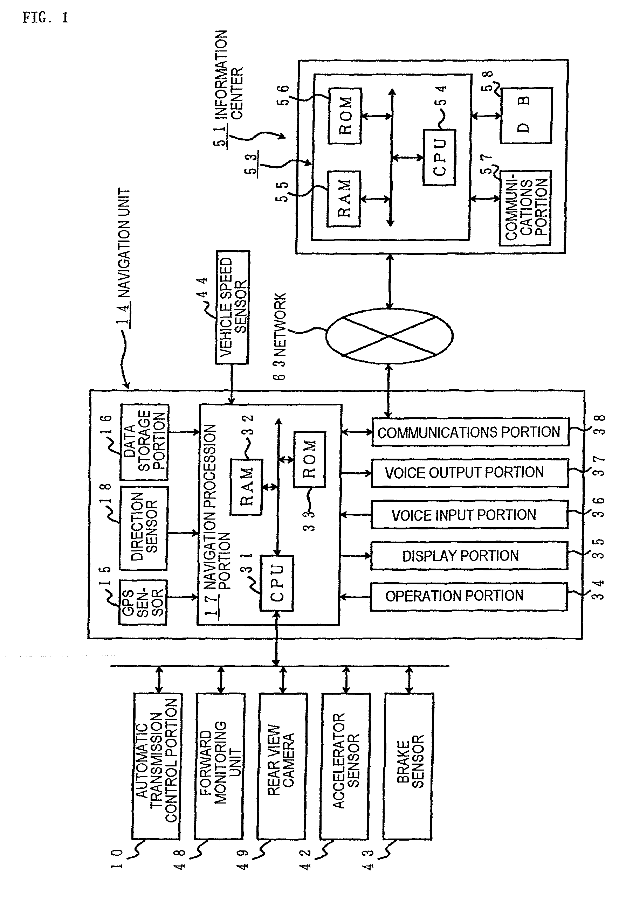

FIG. 1 is a diagram showing a navigation system according to the embodiment of the present invention.

In FIG. 1, the reference numeral 10 denotes an automatic transmission control portion that serves as a power train control portion. The automatic transmission control portion 10 controls a power train that shifts gears at a prescribed gear ratio, such as a continuously variable transmission (CVT) that serves as an automatic transmission, a stepped transmission (automatic transmission), an electric drive unit, or the like.

The reference numeral 14 denotes a navigation unit that serves as an information terminal, such as an on-board unit that is mounted in a vehicle. The reference numeral 63 denotes a network, and the reference numeral 51 denotes an inform center that serves as an information provider. A navigation system is made up of the automatic transmission control portion 10, the navigation unit 14, the network 63, the information center 51, and the like.

The navigation unit 14 includes a Global Positioning System (GPS) sensor 15, a data storage portion 16, a navigation processing portion 17, a direction sensor 18, an operation portion 34, a display portion 35, a voice input portion 36, a voice output portion 37, and a communications portion 38. The GPS sensor 15 serves as a current position detection portion that detects the current position of the vehicle. The data storage portion 16 serves as an information storage portion where map data and various other types of data are stored. The navigation processing portion 17 carries out various types of computational processing, such as navigation processing and the like, based on information that is input. The direction sensor 18 serves as a direction detection portion that detects the vehicle's direction. The operation portion 34 serves as a first input portion, by operating which the driver, who is the operator, makes a prescribed input. The display portion 35 serves as a first output portion that uses images displayed on a screen not shown in FIG. 1 to express various types of information and notify the driver. The voice input portion 36 serves as a second input portion for making a prescribed input by voice. The voice output portion 37 serves as a second output portion that uses voice to express various types of information and notify the driver. The communications portion 38 serves as a transmitting and receiving portion that functions as a communications terminal. The GPS sensor 15, the data storage portion 16, the direction sensor 18, the operation portion 34, the display portion 35, the voice input portion 36, the voice output portion 37, and the communications portion 38 are connected to the navigation processing portion 17.

Also connected to the navigation processing portion 17 are the automatic transmission control portion 10, a forward monitoring unit 48, a rear view camera (rear monitoring camera) 49, an accelerator sensor 42, a brake sensor 43, a vehicle speed sensor 44, and the like. The forward monitoring unit 48 is installed at a prescribed location on the front end of the vehicle and monitors the area in front of the vehicle. The rear view camera 49 is installed at a prescribed location on the rear end of the vehicle and serves as a photography unit that captures images of the area behind the vehicle and as a rear monitoring unit. The accelerator sensor 42 serves as an engine load detection portion that detects the driver's operation of the accelerator pedal based on the accelerator angle. The brake sensor 43 serves as a braking detection portion that detects the driver's operation of the brake pedal based on the amount by which the pedal is depressed. The vehicle speed sensor 44 serves as a vehicle speed detection portion that detects the vehicle speed. Note that the accelerator sensor 42, the brake sensor 43, and the like make up an operation information detection portion that detects information on the operation of the vehicle by the driver.

The GPS sensor 15 detects the vehicle's current position on the Earth, as well as the time, by receiving radio waves generated by a satellite. In this embodiment, the GPS sensor 15 is used as the current position detection portion, but a distance sensor, a steering sensor, an altimeter, or the like not shown in FIG. 1 can also be used individually or in combination instead of the GPS sensor 15. A gyroscopic sensor, a geomagnetic sensor, or the like can be used as the direction sensor 18. In this embodiment, the direction sensor 18, the vehicle speed sensor 44, and the like are installed, but where a GPS sensor having functions to detect the host vehicle direction, the vehicle speed, and the like is used, the direction sensor 18, the vehicle speed sensor 44, and the like are not necessary.

The data storage portion 16 is provided with a map data base made up of map data files, and map data is stored in the map data base. The map data includes intersection data pertaining to intersections (branching points), node data pertaining to nodes, road data pertaining to road links, search data that is processed for searching, facilities data pertaining to facilities, and the like, as well as local feature data pertaining to local features.

The local features are made up of displays installed or formed on the road to provide various kinds of driving-related information and guidance to drivers. These displays include marking lines, indicators, pedestrian crosswalks, manholes, traffic signals, and the like. Marking lines include stop lines to stop vehicles, lane demarcation lines that delineate the boundaries of lanes, demarcation lines that delineate parking spaces, and the like. Indicators include lane differentiation indicators in the form of arrows in each lane to indicate the direction of travel, and guidance indicators, such as the word "Stop" and the like, that warn of an approaching location where the vehicle must stop momentarily. The local feature data include position information, which describes the position of each feature in terms of coordinates and the like, and image information, which shows an image of each feature. Note that for locations where the vehicle must stop momentarily, the information includes places where vehicles enter main roads from side roads, crossings, intersections with flashing red lights, and so on.

The road data pertaining to the lanes include lane data that serve as lane information, including the number of lanes, lane numbers that are assigned to each lane on a road, lane positions, traffic categories that express the direction of travel in each lane, and the like. Data are also stored in the data storage portion 16 in order for the voice output portion 37 to output prescribed information.

A statistical data base made up of statistical data files and a driving history data base made up of driving history data files are also stored in the data storage portion 16. The statistical data in the statistical data files and the driving history data in the driving history data files are stored as actual results data.

The statistical data is actual traffic information provided in the past, that is, historical information that describes a history. Traffic information provided in the past by traffic information centers and the like (not shown in FIG. 1) as information providers, such as the Vehicle Information and Communication System (VICS) center and the like, traffic census information, which is data on traffic volumes from traffic censuses provided by the Ministry of Land Infrastructure and Transport, and road timetable information and the like, also provided by the Ministry of Land Infrastructure and Transport, are used individually or in combination. The statistical data is created by refining the information as necessary, then carrying out statistical processing. Note that congestion forecasting information and the like for forecasting congestion and other purposes can be added. In that case, when the statistical data is created, detailed conditions are added to the historical information, such as information on dates and times, days of the week, weather, various types of events, seasons of the year, facilities (the presence or absence of department stores, supermarkets, and the like), and the like.

The data items in the statistical data are made up of link numbers for various road links, direction flags to indicate the direction of travel, information classifiers that show the type of information, degrees of congestion at specific times, link required times that describe the times required to travel on various road links at specific times, data on link required times averaged for each day of the week (for example, average time for Wednesday), and the like.

The driving history data is made up of information collected by the information center 51 from a plurality of vehicles, i.e., the host vehicle and other vehicles, and represents actual driving records of vehicles traveling on roads where each vehicle has traveled. That is, it is actual history information that describes driving records, and based on the driving data, probe data is computed and accumulated.

The data items in the driving history data are made up of link required times at specific times when vehicles traveled on each road link, degrees of congestion at specific times when vehicles traveled on each road link, and the like. Note that the driving history data can be added to the statistical data. In this embodiment, the degree of congestion is used as a congestion indicator that expresses the scale of congestion. Congestion, crowding, and non-congestion are expressed separately.

In order to store the various types of data, the data storage portion 16 includes a disk not shown in FIG. 1, such as a hard disk, a CD, a DVD, an optical disk, or the like. The data storage portion 16 also includes a read/write head or the like for reading and writing the various type of data. It is also possible to use a memory card or the like for the data storage portion 16. Note that an external storage device is formed by the various disks, the memory card, or the like.

In this embodiment, the map data base, the statistical data base, the driving history data base, and the like are installed in the data storage portion 16, but the map data base, the statistical data base, the driving history data base, and the like can also be installed in the information center 51.

The navigation processing portion 17 includes a CPU 31, a RAM 32, a ROM 33, and a flash memory that is not shown in FIG. 1. The CPU 31 serves as a control device that controls the entire navigation unit 14 and as a computation device. The RAM 32 is used as working memory when the CPU 31 performs various types of computational processing. The ROM 33 contains a control program, as well as various types of programs that search for routes to destinations, execute route guidance, and so on. The flash memory is used to store various types of data, programs, and the like. Note that an internal storage device is formed by the RAM 32, the ROM 33, the flash memory, or the like.

In this embodiment, various types of programs can be stored in the ROM 33, and various types of data can be stored in the data storage portion 16, but programs, data, and the like can also be stored on a disk or the like. In that case, programs, data, and the like that are read from the disk or the like can be written to the flash memory. The programs, data, and the like can therefore be updated by replacing the disk or the like. The control programs, data, and the like of the automatic transmission control portion 10 can also be stored on the disk or the like. The programs, data, and the like can be received through the communications portion 38 and written to the flash memory in the navigation processing portion 17.

The operation portion 34 executes such tasks as correcting the current position when the vehicle starts to move, inputting a departure point and a destination, inputting points to be passed, and operating the communications portion 38, all according to the driver's operations. The operation portion 34 can use a keyboard, mouse, or the like that is installed independently of the display portion 35. The operation portion 34 can also use a touch panel that is capable of executing prescribed input operations that are done by touching or clicking on an image operation portion, such as various types of keys, switches, buttons, and the like that are displayed as images on a screen that is formed by the display portion 35.

The display portion 35 is used as a display. The various screens that are formed on the display portion 35 can display the vehicle's current position as the host vehicle's position; the vehicle's direction as the host vehicle's direction; maps, the specified route, guidance information along the specified route, traffic information, and the like; the distance to the next intersection on the specified route and the direction of travel at the next intersection. The screens can also display operation guidance, operation menus, and key guidance for the image operation portion, the operation portion 34, the voice input portion 36, and the like. The screens can also display programs and the like that are broadcast by FM multiplex.

The voice input portion 36 includes a microphone that is not shown in FIG. 1 and can input required information by voice. The voice output portion 37 includes a voice synthesizing unit and a speaker, which are not shown in FIG. 1. The voice output portion 37 outputs the specified route, the guidance information, the traffic information, and the like by means of a voice that is synthesized by the voice synthesizing unit, for example.

The communications portion 38 includes a beacon receiver and an FM receiver for receiving various types of the information, such as current traffic information that is transmitted from the traffic information center, general information, and the like. The beacon receiver receives the information as radio wave signals or optical signals via radio wave beacons or optical beacons installed along the road. The FM receiver receives the information as FM multiplex broadcasts via an FM broadcast station. Note that the traffic information includes congestion information, regulatory information, parking space information, traffic accident information, service area congestion status information, and the like. The general information includes news, weather forecasts, and the like. The beacon receiver and the FM receiver are combined in a single VICS receiver, but they can also be installed separately.

The traffic information contains an information classification that defines the type of information, a mesh number that specifies a mesh, a link number that specifies a road link connecting two points (e.g., two intersections) and also distinguishes between inbound and outbound halves of the road, and link information that constitutes the content of the information that is provided for the corresponding link number. For example, if the traffic information is congestion information, the link information is made up of congestion leading edge data, which tells the distance from the start of the road link to the leading edge of the congestion; the degree of congestion; a congestion length, which tells the distance from the leading edge of the congestion to its trailing edge; the link required time, which tells the time required to travel the road link; and so on.

The communications portion 38 can also receive map data, statistical data, driving history data, and the like, as well as various types of the information such as traffic information, general information, and the like, via the network 63.

For that reason, the information center 51 includes a server 53, a communications portion 57 connected to the server 53, a data base 58 that serves as an information storage portion, and so on. The server 53 includes a CPU 54, a RAM 55, and a ROM 56. The CPU 54 serves as a control device and as a computation device. The data base 58 stores the same sort of data that is stored in the data storage portion 16, such as map data statistical data, and driving history data, for example. The information center 51 can also provide in real time various types of the information, such as current traffic information that is transmitted from the traffic information center, general information, and the like, as well as driving history data that is collected from a plurality of vehicles (the host vehicle and other vehicles).

The forward monitoring unit 48 is made up of a radar, such as a laser radar, a millimeter-wave radar, or the like, or an ultrasonic sensor or the like, or a combination of a radar or the like and an ultrasonic sensor or the like. The forward monitoring unit 48 monitors a vehicle that is traveling ahead of the host vehicle, that is, a vehicle ahead, and also monitors momentary stopping points, obstacles, and the like. The forward monitoring unit 48 also detects the relative speed, which is the vehicle speed relative to the vehicle ahead, the approach speed in relation to momentary stopping points, the approach speed in relation to obstacles, the distance to the vehicle ahead, the time to the vehicle ahead, and the like, all as information about the area around the host vehicle.

The rear view camera 49 is made up of a CCD device and is mounted so that its optical axis tilts downward in order to monitor the area behind the vehicle. In addition to local features, the subjects for image capture include a vehicle traveling behind the host vehicle, that is, a vehicle behind, buildings and other structures on the roadside, and the like. The rear view camera 49 generates image data of the photographed subjects and sends the data to the CPU 31. The CPU 31 reads the image data and executes image processing on the image data to recognize individual photographed subjects as recognized objects. In this embodiment, a CCD device is used as the rear view camera 49, but a C-MOS device or the like can be used.

Note that the navigation system, the control portion 10, the navigation processing portion 17, the CPUs 31, 54, the server 53, and the like function as computers, independently or in combinations of two or more, and execute computational processing based on various types of programs, data, and the like. Also, storage media are made up of the data storage portion 16, the RAMs 32, 55, the ROMs 33, 56, the data base 58, the flash memories, and the like. Also, microprocessors or the like can be used as computation devices in place of the CPUs 31, 54.

Next, the basic operation of the navigation system described above will be explained.

First, when the driver operates the operation portion 34 and the navigation unit 14 starts up, a navigation initialization processing portion (not shown in FIG. 1) of the CPU 31 executes navigation initialization processing, reads the current position of the host vehicle detected by the GPS sensor 15, reads the host vehicle direction detected by the direction sensor 18, and initializes various types of data. Next, a matching processing portion (not shown in FIG. 1) of the CPU 31 executes matching processing and specifies the current position by judging on which road link the current position lies, based on the track of the current position that was read, the shapes and arrangement of the various road links that make up the roads in the vicinity of the current position, and so on.

Also, in this embodiment, the matching processing portion further specifies the current position based on the positions of various local features that are photographed subjects photographed by the rear view camera 49.

For that purpose, an image recognition processing portion of the CPU 31, not shown in FIG. 1, executes image recognition processing, reading in image data from the rear view camera 49 and recognizing a local feature in an image formed from the image data. Also, a distance computation processing portion of the CPU 31, not shown in FIG. 1, executes distance computation processing, computing a distance La from the camera 49 to the actual local feature, based on the position of the local feature in the image. A current position specification processing portion of the matching processing portion executes current position specification processing, reading in the distance La and reading local feature data from the data storage portion 16 to obtain the coordinates of the local feature, then specifying the current position based on the coordinates and the distance La.

A lane detection processing portion of the CPU 31, not shown in FIG. 1, executes lane detection processing, detecting the lane in which the host vehicle is currently driving by checking a local feature that was recognized based on the image data against the local feature data that are read from the data storage portion 16.

The lane detection processing portion can detect the current driving lane by reading the sensor output from the geomagnetic sensor, judging whether or not a detected object consisting of a strongly magnetic object such as a manhole cover or the like is present in a given lane on the road, based on the sensor output, and then detecting the driving lane based on that judgment. The lane detection processing portion can also detect the current driving lane by using the highly accurate GPS sensor 15 to detect the current position with high accuracy, then detecting the lane based on the current position detection result. As necessary, the lane detection processing portion can also detect the current driving lane by combining the geomagnetic sensor output, the current position, and the like at the same time that it executes image processing on image data of marking lines.

A basic information acquisition processing portion of the CPU 31, not shown in FIG. 1, executes basic information acquisition processing, obtaining map data from the data storage portion 16 or receiving map data from the information center 51 or the like via the communications portion 38. Note that when map data is obtained from the information center 51 or the like, the basic information acquisition processing portion writes the received data to the flash memory.

A display processing portion of the CPU 31, not shown in FIG. 1, executes display processing, forming various types of screens on the display portion 35. For example, a map display processing portion of the display processing portion executes map display processing, forming a map display screen on the display portion 35 that displays the current position as the host vehicle position and the vehicle direction as the host vehicle direction, while also displaying maps of the areas surrounding the map screen.

Therefore, the driver is able to drive the vehicle according to the map, the host vehicle position, and the host vehicle direction.

When the driver operates the operation portion 34 to input a destination, a destination setting processing portion of the CPU 31, not shown in FIG. 1, executes destination setting processing and sets the destination. Note that the departure point can also be input and set as necessary. It is also possible to register a given location in advance, then set the registered location as the destination. When the driver operates the operation portion 34 to input a search condition, a search condition setting processing portion of the CPU 31, not shown in FIG. 1, executes search condition setting processing and sets the search condition.

When the destination and search condition are set in this manner, a route search processing portion of the CPU 31, not shown in FIG. 1, executes route search processing. The route search processing portion reads the current position, the destination, the search condition, and the like, and reads search data and the like from the data storage portion 16. Based on the current position, the destination, and the search data, the route search processing portion searches for a route from the departure point, expressed as the current position, to the destination, according to the search condition. The route search processing portion outputs route data that describe the specified route. The specified route is the route for which the total of the link costs assigned to each road link is the lowest.

Note that route search processing can be executed at the information center 51. In that case, the CPU 31 transmits the current position, the destination, the search condition, and the like to the information center 51 via the network 63. When the information center 51 receives the current position, the destination, the search condition, and the like, a route search processing portion of the CPU 54, not shown in FIG. 1, executes route search processing in the same manner as CPU 31. The route search processing portion reads search data from the data base 58 and based on the current position, the destination, and the search data, searches for a route from the departure point to the destination, according to the search condition. The route search processing portion outputs route data that describe the specified route. Next, a transmission processing portion of the CPU 54, not shown in FIG. 1, executes transmission processing, transmitting the route data to the navigation unit 14 via the network 63.

Next, a guidance processing portion of the CPU 31, not shown in FIG. 1, executes guidance processing and provides route guidance. For this purpose, a route display processing portion of the guidance processing portion executes route display processing, reading the route data and displaying the specified route on the map screen according to the route data.

Incidentally, when the vehicle must turn right or left at a prescribed intersection, the intersection is set as a guidance point and as a guidance intersection for route guidance. For that purpose, a guidance intersection setting processing portion of the guidance processing portion executes guidance intersection setting processing. The guidance intersection setting processing portion determines, according to the route data, that is, based on the specified route, whether or not there is an intersection where the vehicle must turn right or left. If there is an intersection where the vehicle must turn right or left, the intersection is set as a guidance intersection.

Next, an enlarged guidance point map forming processing portion of the guidance processing portion executes enlarged guidance point map forming processing. Before the vehicle arrives at the guidance intersection, the enlarged guidance point map forming processing portion forms an enlarged map of the guidance intersection, that is, an enlarged intersection map, as an enlarged guidance point map in a specified area of the map screen and uses the enlarged intersection map to provide route guidance. In order for route guidance to be provided, an enlarged guidance point map display point is set at a location that is a set distance before the guidance intersection (closer than the guidance intersection to the current position) along the specified route. When the vehicle arrives at the enlarged guidance point map display point, the enlarged guidance point map is displayed.

In this case, a map of the area surrounding the guidance intersection, the specified route, and landmarks such as facilities and the like that serve as markers at the guidance intersection are displayed on the enlarged intersection map. Note that on an automobile-only toll road, such as an expressway, metropolitan expressway, toll road, or the like, intersections such as junctions and the like, where traffic merges or diverges, are also set as guidance intersections.

Incidentally, in a case where the specified route includes a road in which a plurality of lanes are formed, lane guidance can be provided. For that purpose, a recommended lane computation processing portion of the CPU 31, not shown in FIG. 1, executes recommended lane computation processing, reading the specified route, as well as intersection data, lane information, and the like, then computing a recommended lane on each road on the specified route, based on the specified route, the intersection data, the lane information, and the like. Also, a lane display processing portion of the guidance processing portion executes lane display processing, forming a lane guidance map in a specified area of the map screen, displaying the recommended lane in the lane guidance map, and guiding the vehicle from its current driving lane to the recommended lane.

In a case where a plurality of lanes is formed in a road that enters a guidance intersection (hereinafter referred to as an entrance road) or in a road that exits a guidance intersection (hereinafter referred to as an exit road), the enlarged guidance point map forming processing portion displays the recommended lane on the enlarged intersection map.

Incidentally, during the interval that lane guidance is being provided for the guidance intersection, it sometimes happens that the recommended lane changes before the vehicle arrives at the guidance intersection, because the road circumstances change, such as when there is a right turn-only lane or left turn-only lane before the guidance intersection, or the number of lanes decreases. In that case, if the system recommends a lane change after the vehicle has passed the point where the recommended lane changes, that is, the recommended lane change point, the driver becomes confused.

Accordingly, in this embodiment, a recommended lane change point detection processing portion of the guidance processing portion executes recommended lane change point detection processing, reading recommended lane information, judging whether or not the recommended lane will change during the interval from the current position to the guidance intersection, that is, during the interval when lane guidance is provided, and if the recommended lane will change, detecting the recommended lane change point. Also, a recommended lane change notification processing portion of the guidance processing portion executes recommended lane change notification processing, reading the recommended lane change point and notifying the driver, before the vehicle arrives at the recommended lane change point, that the recommended lane will change. For that purpose, a recommended lane change point notification point setting processing portion of the recommended lane change notification processing portion executes recommended lane change point notification point setting processing, setting a point at a specified distance before the recommended lane change point as the point for notifying the driver of the recommended lane change point, that is, as the recommended lane change point notification point. A voice output notification processing portion of the recommended lane change notification processing portion executes voice output notification processing, such that when the vehicle arrives at the recommended lane change point notification point, the system notifies the driver, by means of voice output from the voice output portion 37, that the recommended lane will change at the recommended lane change point.

A route guidance point setting processing portion of the guidance processing portion executes route guidance point setting processing, setting one or more route guidance points, which in this embodiment is a plurality of route guidance points, at locations at set distances before the guidance intersection on the specified route. When the vehicle arrives at a route guidance point, a voice output processing portion of the guidance processing portion executes voice output processing, outputting by voice from the voice output portion 37 route guidance for the guidance intersection with a content that is set in advance for each of the route guidance points. Note that the enlarged guidance point map display point at which the enlarged guidance point map is displayed and one of the route guidance points, such as the first route guidance point, for example, can be set to the same point.

In this case, if there is a recommended lane change point on the specified route to the guidance intersection, if the timing of the start of route guidance for the guidance intersection is not the optimum timing, it may not be possible to make the vehicle change reliably to the new recommended lane at the recommended lane change point.

Accordingly, in this embodiment, in order for it to be possible to make the vehicle change reliably to the new recommended lane at the recommended lane change point, the recommended lane change point is used as a reference point for computing the timing of the start of route guidance for the guidance intersection, that is, the guidance start timing, and for setting the first route guidance point.

Next, the system judges whether or not the vehicle has passed the recommended lane change point. When the vehicle passes the recommended lane change point, a recommended lane change point passing guidance processing portion of the guidance processing portion executes recommended lane change point passing guidance processing, setting a point at a specified distance beyond the recommended lane change point as a recommended lane change point passing guidance point. When the vehicle arrives at the recommended lane change point passing guidance point, the system notifies the driver that the vehicle has passed the recommended lane change point by providing guidance to the new recommended lane.

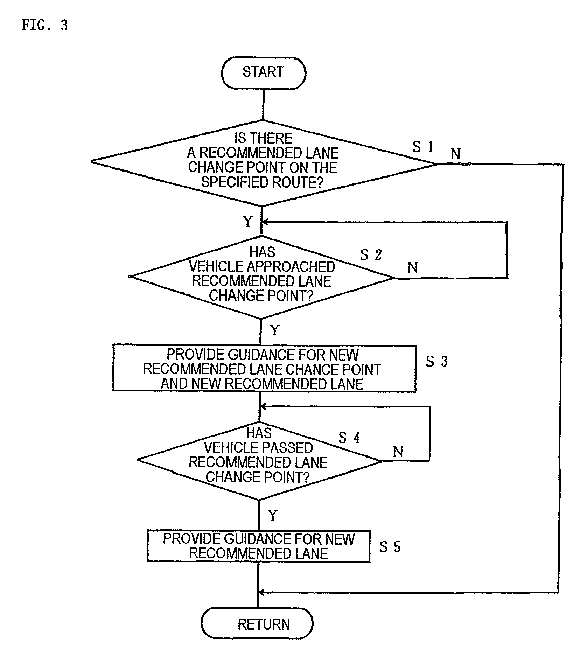

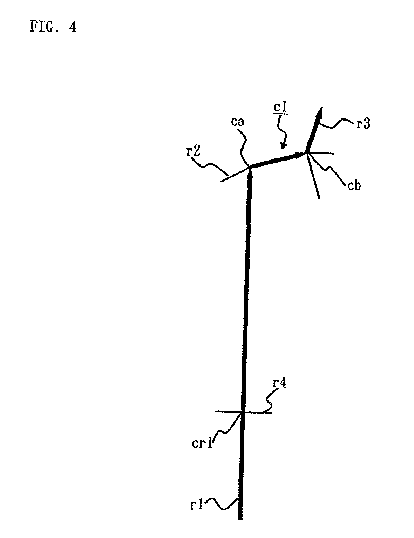

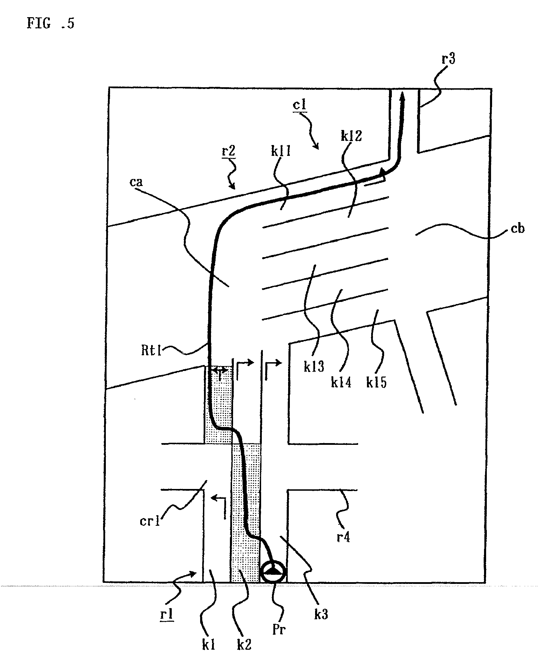

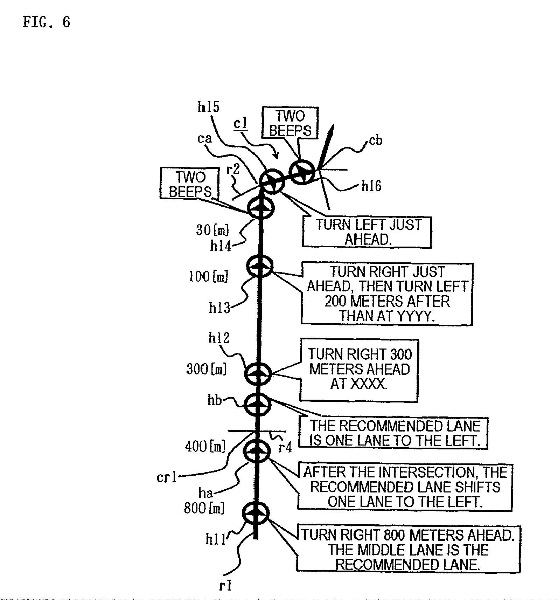

FIG. 3 is a flowchart showing the operation of a route guidance processing portion according to the embodiment of the present invention. FIG. 4 is a schematic diagram showing an example of the guidance intersection according to the embodiment of the present invention. FIG. 5 is a detailed drawing of the guidance intersection according to

the embodiment of the present invention. FIG. 6 is a diagram showing an example of lane guidance for the guidance intersection according to the embodiment of the present invention.

In FIG. 2, the reference numerals r1 to r4 denote roads, the reference numeral cr1 denotes an intersection of the roads r1 and r4, and the reference numeral c1 denotes a guidance intersection where the roads r1 and r2 intersect and the roads r2 and r3 intersect. The guidance intersection c1 includes successive intersections ca and cb. The roads r1 and r2 intersect at the intersection ca, and the roads r2 and r3 intersect at the intersection cb. The reference numeral Pr denotes the current position, and the reference numeral Rt1 denotes the specified route. The specified route Rt1 is configured such that it passes along the roads r1 to r3 in that order and, at the guidance intersection c1, turns right at the intersection ca, then immediately turns left at the intersection cb.

Lanes k1 to k3 are formed on the road r1, and lanes k11 to k15 are formed on the road r2. The lane k1 is a left turn-only lane before the intersection cr1, but before the intersection ca of the guidance intersection c1, the lane k1 is a lane where both right and left turns are possible. The lanes k2 and k3 are right turn-only lanes before the intersection ca of the guidance intersection c1.

When the vehicle travels along the specified route Rt1, the vehicle passes the intersection cr1, then at the guidance intersection c1, turns right at the intersection ca, entering the road r2, and then turns left at the intersection cb.

At this time, on the road r1, the lane k1 is a left turn-only lane before the intersection cr1, so the recommended lane computation processing portion makes the lane k2 the recommended lane in the lane guidance from the current position Pr to the intersection cr1.

Before the guidance intersection c1, the lane k1 is a lane where a right turn is possible, and the lanes k2 and k3 are right turn-only lanes, but because the vehicle will turn left at the intersection cb, the recommended lane computation processing portion makes the lane k1 the recommended lane in the lane guidance from the intersection cr1 up to the intersection ca and makes the lane k11 the recommended lane in the lane guidance from the intersection ca to the intersection cb.

The recommended lane change point detection processing portion reads the recommended lane information and detects the recommended lane change point on the specified route Rt1 to the intersection cb. On the specified route Rt1, the recommended lane changes from the lane k2 to the lane k1 at the intersection cr1, so the intersection cr1 is detected as the recommended lane change point. Note that it is actually not desirable for the lane to be changed within the intersection cr1, so the far-side edge of the intersection cr1 is set as the recommended lane change point. The near-side edge of the intersection cr1 can also be set as the recommended lane change point.

The recommended lane change point notification point setting processing portion sets a point at a specified distance before the intersection cr1 as a recommended lane change point notification point ha. When the vehicle arrives at the recommended lane change point notification point ha, which is set at a location 400 meters before the intersection cr1, the voice output processing portion notifies the driver by voice output from the voice output portion 37 that the recommended lane will change from the lane k2 to the lane k1 at the intersection cr1.

The route guidance point setting processing portion sets route guidance points h11 to h14 on the specified route Rt1 at locations 800 meters, 300 meters, 100 meters, and 30 meters before the guidance intersection c1, and sets route guidance points h15 and h16 between the intersections ca and cb on the road r2.

Next, when the vehicle arrives at each of the route guidance points h11 to h16, the voice output processing portion outputs by voice from the voice output portion 37 route guidance for the guidance intersection c1 with a content that is set in advance for each of the route guidance points h11 to h16.

In this case, the intersection cr1 is set as a recommended lane change point on the specified route Rt1 to the guidance intersection c1, so the intersection cr1 is used as a reference point for computing the guidance start timing for the guidance intersection c1, and for setting the first route guidance point h11 at 800 meters before the guidance intersection c1, so that the vehicle will be able to change to the new recommended lane k1 at the intersection cr1.

Next, the system judges whether or not the vehicle has passed the intersection cr1. When the vehicle passes the intersection cr1, the recommended lane change point passing guidance processing portion provides guidance to the new recommended lane at a recommended lane change point passing guidance point hb that is set on the guidance intersection c1 side of the intersection cr1.

Next, an example of lane guidance will be explained.

When the vehicle is in transit on the road r1, a message such as "Turn right 800 meters ahead. The middle lane is the recommended lane," or the like is output by voice at the route guidance point h11. A message such as "After the intersection, the recommended lane shifts one lane to the left," or the like is output by voice at the recommended lane change point notification point ha. A message such as "The recommended lane is one lane to the left," or the like is output by voice at the recommended lane change point passing guidance point hb, after the vehicle has passed the intersection cr1. A message such as "Turn right 300 meters ahead at XXXX," or the like is output by voice at the route guidance point h12. A message such as "Turn right just ahead, then turn left 200 meters after that at YYYY," or the like is output by voice at the route guidance point h13. At the route guidance point h14, a notification sound (two beeps) is output to indicate that the vehicle is about to enter the guidance intersection c1.

Also, when the vehicle passes the intersection ca, a message such as "Turn left just ahead," or the like is output by voice at the route guidance point h15. At the route guidance point h16, a notification sound (two beeps) is output to indicate that the vehicle is about to enter the intersection cb.

Because the driver is thus notified that the recommended lane will change, before the vehicle arrives at the recommended lane change point, the driver does not become confused. Also, because the driver can know the recommended lane change point and the new recommended lane as a result of the notification, it is not necessary for the driver to change lanes suddenly. Therefore, it is possible for the driver to drive the vehicle safely and smoothly.

Also, because the guidance start timing for the guidance intersection is computed and the first route guidance point h11 is set using the recommended lane change point as a reference, the timing of the start of route guidance for the guidance intersection can be optimized. Therefore, sufficient distance can be ensured from the current position to the recommended lane change point, so it is possible for the vehicle to change reliably to the new recommended lane at the recommended lane change point.

Next, the flowchart will be explained.
At step S1, the system judges whether or not there is a recommended lane change point on the specified route. If there is a recommended lane change point, control passes to step S2. If there is no recommended lane change point, processing ends.
At step S2, the system waits until the vehicle approaches the recommended lane change point. When the vehicle approaches, control passes to step S3.
At step S3, guidance is provided for the recommended lane change point and the new recommended lane.
At step S4, the system waits until the vehicle passes the recommended lane change point. When the vehicle passes the recommended lane change point, control passes to step S5.
At step S5, guidance is provided for the new recommended lane, and control is returned.

Note that the present invention is not limited by the embodiment described above. Various modifications can be made based on the purpose of the present invention, and it is intended that all modifications within the present invention be included.

A route guidance system includes a current position detection portion; a route search processing portion that searches for a specified route to a destination; a guidance intersection setting processing portion that sets a guidance intersection based on the specified route; a recommended lane computation processing portion that computes the recommended lane on each road on the specified route, based on the specified route; a recommended lane change point detection processing portion that detects a recommended lane change point, where a recommended lane changes, between the current position and the guidance intersection; and a recommended lane change notification processing portion that, before the host vehicle arrives at the recommended lane change point, notifies the driver that the recommended lane will change. The recommended lane change point is detected, and the driver is notified, before the host vehicle arrives at the recommended lane change point, that the recommended lane will change. Therefore, the driver is not confused when being guided to drive the host vehicle in the recommended lane.

## Claims

1. A route guidance system, comprising:
a current position detection portion (15, 18, 44) that detects a current position (Pr) of a host vehicle;
a route search processing portion (31) that searches for a specified route (Rtl) to a destination, based on the current position;
a guidance intersection setting processing portion (31) that sets a guidance intersection (c1) based on the specified route;
a recommended lane computation processing portion (31) that computes a recommended lane on each road on the specified route, based on the specified route;
a recommended lane change point detection processing portion (31) that detects a recommended lane change point, where the recommended lane changes, between the current position and the guidance intersection; and
a recommended lane change notification processing portion (31) that, before the host vehicle arrives at the recommended lane change point, notifies the driver that the recommended lane will change.

2. The route guidance system according to claim 1, wherein the recommended lane change notification processing portion provides a guidance concerning the recommended lane change point and a new recommended lane.

3. The route guidance system according to claim 1, further comprising:
a route guidance point setting processing portion that sets a route guidance point at a specified location before the guidance intersection; and
a route guidance processing portion that provides route guidance for the guidance intersection when the host vehicle arrives at the route guidance point, wherein
the recommended lane change notification processing portion notifies the driver that the recommended lane will change during the time that route guidance is being provided.

4. The route guidance system according to claim 1, further comprising:
a recommended lane guidance processing portion that provides guidance to a new recommended lane when the vehicle has passed the recommended lane change point.

5. A route guidance method, wherein
a specified route (Rt1) to a destination is sought, based on a current position (Pr) of a host vehicle detected by a current position detection portion (15, 18, 44);
a guidance intersection (c1) is set based on the specified route;
a recommended lane is computed on each road on the specified route, based on the specified route;
a recommended lane change point, at which the recommended lane changes, is detected between the current position and the guidance intersection; and
before a host vehicle arrives at the recommended lane change point, the driver is notified that the recommended lane will change.
